# EUROPÄISCHE PATENTSCHRIFT

(11) **EP 1 764 288 B1**
(45) Veröffentlichungstag und Bekanntmachung des Hinweises auf die Patenterteilung: **10.08.2011**
(21) Anmeldenummer: 06018742.4
(22) Anmeldetag: 07.09.2006
(51) Int. Cl.: B62D 25/20

(54) **Karosserie für ein Kraftfahrzeug**
Vehicle body
Carrosserie de véhicule

(30) Priorität: 16.09.2005 DE 102005044172
(43) Veröffentlichungstag der Anmeldung: 21.03.2007
(73) Patentinhaber: GM Global Technology Operations LLC, Detroit, MI 48265-3000 (US)
(72) Erfinder: Butz, Ingo, 67294 Bischheim (DE); Maucher, Roland, 65343 Eltville (DE); Mueller, Reinhard, 55323 Ensheim (DE)
(74) Vertreter: Daniel, Ulrich W.P.

(56) Entgegenhaltungen:
- EP-A- 0 619 215
- FR-A- 2 790 009
- JP-A- 59 002 971
- US-A- 5 782 525

## Beschreibung

Die vorliegende Erfindung betrifft eine Karosserie für ein Kraftfahrzeug mit einem ersten und einem zweiten Karosserieteil, die entlang zweier Linien verbunden sind und zwischen den zwei Linien einen langgestreckten Hohlraum begrenzen.

Eine solche Karosserie muss bestimmten Anforderungen hinsichtlich ihrer Verformungsbeständigkeit bei einem Unfall genügen. Die Verformungsbeständigkeit ihrer einzelnen Teile lässt sich zwar erhöhen, indem sie aus Blechen mit hoher Wandstärke gefertigt werden, doch führt der damit verbundene Gewichtzuwachs zu einem erhöhten Kraftstoffverbrauch, der die Wirtschaftlichkeit des Fahrzeugs beeinträchtigt.

Aus JP 59002971 A und aus US-A 5 872 525 ist jeweils eine Karosserie für ein Kraftfahrzeug bekannt, bei der ein erstes und ein zweites Karosserieteil entlang zweier Linien verbunden sind und zwischen den zwei Linien einen langgestreckten Hohlraum begrenzen, und ein Verstärkungselement sich durch den Hohlraum von einer der Linien zur anderen erstreckt und an den Linien mit den zwei Karosserieteilen verbunden ist. Insbesondere JP 59002971 A zeigt Punktschweißstellen, an denen vier Bleche übereinanderliegen.

Aufgabe der Erfindung ist, eine Karosserie für ein Kraftfahrzeug anzugeben, bei der eine große Zahl von Blechen eines Verstärkungselements und von Karosserieteilen in einem Arbeitsgang miteinander entlan einer Linie verbunden werden können.

Die Aufgabe wird gelöst durch eine Karosserie wie in Anspruch 1 definiert. Wenn die Zähne am Verstärkungselement gebildet sind, können entlang der Linie sowohl die Zähne des Verstärkungselements mit den Karosserieteilen als auch - in den Zahnzwischenräumen - die Karosserieteile miteinander verbunden werden.

Das Verstärkungselement ist besonders vorteilhaft an Stellen eingesetzt, an denen der Hohlraum bereits von sich aus, vor einem Unfall, einen geknickten Verlauf hat, da eine solche Stelle besonders gefährdet ist, unter den bei einem Unfall auf sie wirkenden Kräften zu kollabieren.

Besonders hohe Anforderungen an die Formstabilität werden bei einem Hohlraum gestellt, dessen Karosserieelemente benachbart zu einer Tür verlaufen, da eine Verformung, bei der ein Karosserieelement gegen die Tür drückt, dazu führen kann, dass sich diese nicht mehr öffnen lässt, was für die Fahrzeuginsassen eine erhebliche Gefährdung darstellt.

Ein geknickter Hohlraum in der Nähe einer Tür erstreckt sich häufig unterhalb der Tür und zwischen der Tür und einem rückwärtigen Radkasten.

Über den durch das Verstärkungselement versteiften Karosseriebereich können beträchtliche Kräfte ohne Gefahr einer Verformung oder Beschädigung in die Karosserie eingeleitet werden. Dies kann vorteilhaft ausgenutzt werden, indem eine Aufnahmestelle für einen Wagenheber an wenigstens einem der Karosserieteile oder dem Verstärkungsteil benachbart zu einer der Linien vorgesehen wird.

Einer ersten Ausgestaltung zufolge ist eines der Karosserieteile, die den Hohlraum begrenzen, eine Seitenwand der Karosserie und das andere eine Plattform. Alternativ können die zwei Karosserieteile auch ein Außenblech und ein Innenblech einer Seitenwand sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Teilansicht einer Seitenwand eines Kraftfahrzeugs, an der die vorliegende Erfindung verwirklicht ist;
- Fig. 2: einen schematischen Schnitt durch die Seitenwand und ein Teil einer daran angrenzenden Plattform; und
- Fig. 3: eine auseinandergezogene Ansicht von Abschnitten der Seitenwand, des Verstärkungsteils und der Plattform.

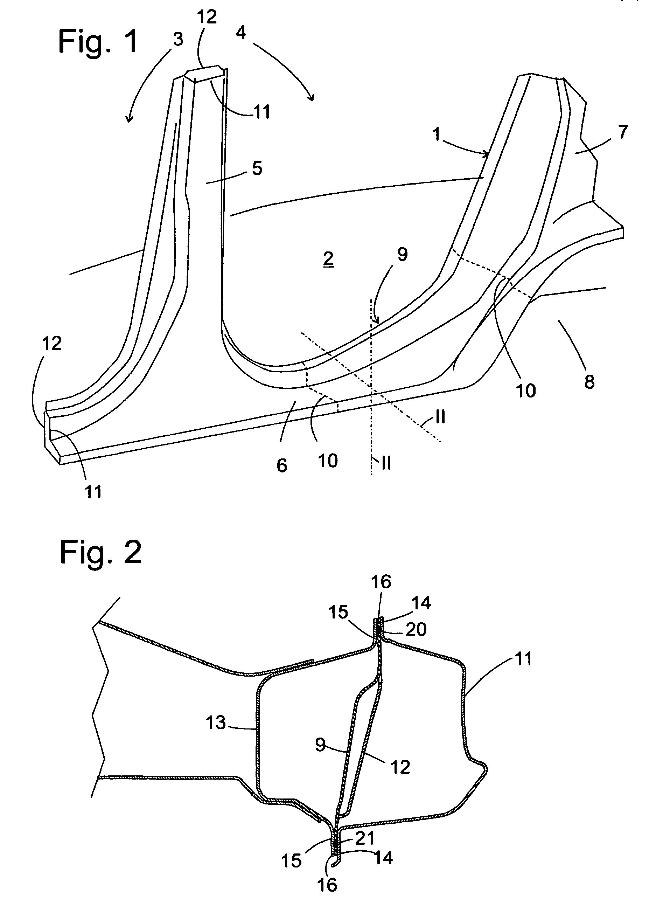

Fig. 1 zeigt stark schematisiert eine Teilansicht einer Seitenwand 1 eines Kraftfahrzeugs, die in ihrem unteren Bereich an einer Plattform 2 befestigt ist. In dem Bildausschnitt zu sehen ist jeweils ein Teil einer Fahrertüröffnung 3, einer rückwärtigen Türöffnung 4, einer B-Säule 5 zwischen den Türöffnungen, eines unter den Türöffnungen 3, 4 verlaufenden Schwellers 6, eines rückwärtigen Kotflügels 7 und eines rückwärtigen Radkastens 8.

Wie an den in der Darstellung abgeschnittenen Enden der B-Säule 5 und des Schwellers 6 zu sehen, ist die Seitenwand 1 eine hohle Struktur mit zwei Blechen, die jeweils eine Außenwand 11 bzw. eine Innenwand 12 bilden und an ihren Rändern miteinander verschweißt sind. Die Innen- und Außenwand begrenzen somit einen Hohlraum, der sich im Schweller 6 unterhalb der Türen horizontal und zwischen der rückwärtigen Türöffnung 4 und dem Radkasten 8 schräg aufwärts erstreckt. Wenn das Heck des Fahrzeugs in einen Zusammenstoß verwickelt ist, ist der Bereich unterhalb der Türöffnung 4, bzw. zwischen der Türöffnung 4 und dem Radkasten 8 stark gefährdet, einzuknicken und dabei eine (in der Fig. nicht gezeigte) rückwärtige Tür einzuklemmen, sofern nicht geeignete Gegenmaßnahmen getroffen werden.

Diese Gegenmaßnahmen bestehen erfindungsgemäß aus einem Verstärkungselement in Form eines in Fig. 1 hinter der Seitenwand 1 verborgenen Blechs 9, das an der Innenseite der Seitenwand 1, zwischen gestrichelt eingezeichneten Begrenzungslinien 10, zwischen der Seitenwand 1 und der Plattform 2 eingeschweißt ist.

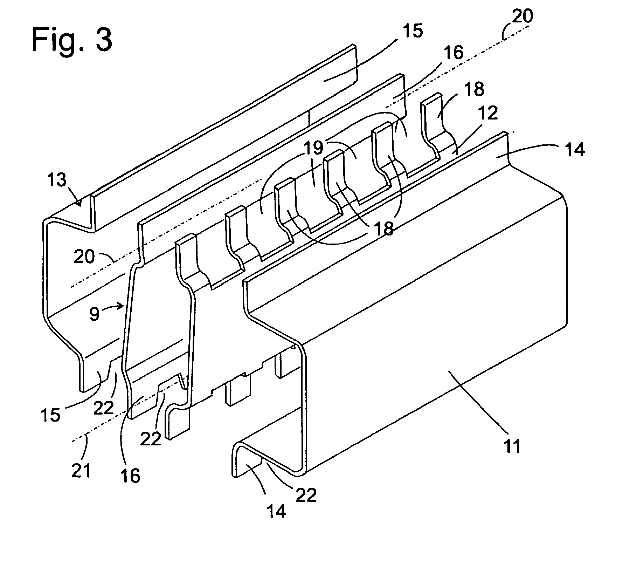

Um dies zu veranschaulichen, zeigt Fig. 2 einen schematischen Schnitt entlang einer durch Linien II in Fig. 1 bezeichneten Ebene. Man erkennt in dem Schnitt der Fig. 2 die Außenwand 11 und die Innenwand 12 der Seitenwand 1, ein rinnenförmiges Element 13 der Plattform 2 sowie, zwischen der Innenwand 12 und dem rinnenförmigen Element 13, das Verstärkungsblech 9. Die Außenwand 11 und das Element 13 weisen jeweils an ihren Längsrändern einander zugewandte Flansche 14, 15 auf. Zwischen den Flanschen 14, 15 befindet sich jeweils ein Randbereich 16 des Verstärkungsblechs 9. Die Innenwand 12 greift in dem Schnitt der Fig. 2 nicht zwischen die Flansche 14, 15 ein. Der Grund hierfür ist der gezahnte Verlauf ihrer Ränder 17, wie der besseren Anschaulichkeit halber in Fig. 3 auseinandergezogen perspektivisch dargestellt. Wie man sieht, entspricht den Flanschen 14, 15 bzw. dem Randbereich 16 des Verstärkungsblechs 9 an der Innenwand 12 eine Reihe von jeweils durch Zahnzwischenräume 19 beabstandeten Zähnen 18. Wenn die in Fig. 3 auseinandergezogen dargestellten Teile wie in Fig. 2 gezeigt in Kontakt zueinander platziert werden und entlang der Flansche 14, 15 entlang Schweißlinien 20, 21 unter Druckausübung verschweißt werden, dann ist die Zahl der zu verschweißenden Bleche in den Zahnzwischenräumen 19 jeweils 3, und eine zuverlässig belastbare Schweißverbindung der Bleche 11, 13, 9 kann hergestellt werden, indem diese durch Druck in Kontakt miteinander gebracht und punktgeschweißt werden. In Höhe der Zähne 18 liegen jeweils vier Bleche übereinander. Durch Punktschweißen an dieser Stelle wird jeweils eine feste Verbindung zwischen dem rinnenförmigen Element 13 und dem Verstärkungsblech 9 sowie zwischen den Zähnen 18 der Innenwand 12 und der Außenwand 11 hergestellt. Eine zuverlässige Schweißverbindung zwischen den Zähnen 18 der Innenwand 12 und dem Verstärkungsblech 9 herzustellen ist schwierig, ist aber auch nicht erforderlich, da das Verstärkungsblech 9 an jedem Schweißpunkt fest mit dem Element 13 der Plattform und in Höhe der Zahnzwischenräume 19 auch mit der Seitenwand 1 verbunden ist.

Um Gewicht zu sparen und um das Schweißen zu erleichtern, ist es wünschenswert, dass die Wandstärke des Verstärkungsblechs 9 gering ist. Um dennoch eine hohe Belastbarkeit des Verstärkungsblechs 9 zu gewährleisten, ist es vorzugsweise aus einem Dualphasenstahl gefertigt.

Es wäre zwar denkbar, auch die Außenwand 11 anstatt mit dem durchgehenden Flansch 14 mit einem gezahnten Rand zu versehen, dessen Zähne jeweils in die Zahnzwischenräume 19 eingreifen, so dass die Zahl der mit einer Punktschweißung zu schweißenden Bleche nirgends größer als drei ist. Dies könnte zwar gewährleisten, dass das Verstärkungsblech 9 an jedem Schweißpunkt auch fest mit der Seitenwand 1 verbunden ist, doch ist es schwierig, die Dichtigkeit der ineinander greifenden Zähne gegen das Eindringen von Verschmutzungen und Feuchtigkeit sicher zu stellen.

Als weitere alternative Ausgestaltung der Erfindung kommt in Betracht, dass Verstärkungsblech 9 mit einem gezahnten Rand und statt dessen die Innenwand mit einem durchgehenden Rand zu versehen. Dies hätte jedoch gegenüber der gezeigten Ausgestaltung den Nachteil, dass die Schweißquerschnittsfläche, die das Verstärkungsblech 9 mit dem Flansch 15 verbindet, kleiner als bei der gezeigten Ausgestaltung ist, so dass man Gefahr läuft, die Reißfestigkeit des Verstärkungsblech nicht optimal auszunutzen.

Die Wirkung des Verstärkungsblechs 9 beruht zum einen auf seiner Zugbelastbarkeit, d.h. dem Widerstand, den es einer Verformung der Seitenwand 1 entgegensetzt, bei der sich der Abstand zwischen den Schweißlinien 20, 21 erhöht. Zum anderen leistet es auch einen erheblichen Widerstand gegen eine Stauchung, d.h. eine Verformung, bei der sich die Schweißlinien aufeinander zu bewegen, und zwar vor allem dann, wenn es in einer zwischen den Linien hindurch verlaufenden Schnittebene eine Krümmung aufweist, die es ihm erschwert, einer an den Schweißlinien 20, 21 ausgeübten Kompressionskraft durch eine Seitwärtsauslenkung auszuweichen. Eine solche Krümmung kann gezielt herbeigeführt sein, indem in das Verstärkungsblech 9 eine Wellenstruktur mit sich quer zu den Linien 20, 21 erstreckenden Wellenkämmen eingeprägt ist; sie kann sich aber auch einfach dadurch ergeben, dass die zwei Linien 20, 21 selbst eine Krümmung aufweisen, der das Verstärkungsblech folgen muss.

In den unteren Flanschen 14, 15 des rinnenförmigen Elements 13 und der Außenwand 11 sowie in dem unteren Randbereich des Verstärkungsblechs 9 sind in Fig. 3 Kerben 22 gezeigt. Diese Kerben 22 fallen im miteinander verbundenen Zustand der Teile 9, 11, 12, 13 übereinander. Da die miteinander verbundenen Teile 9, 11, 12, 13 eine sehr steife Struktur bilden, kann an dieser Stelle ein Wagenheber angesetzt werden, ohne dass die Gefahr einer Verformung von Teilen der Karosserie besteht.

### Bezugszeichenliste

- 01.: Seitenwand
- 02.: Plattform
- 03.: Fahrertüröffnung
- 04.: rückwärtige Türöffnung
- 05.: B-Säule
- 06.: Schweller
- 07.: Kotflügel
- 08.: Radkasten
- 09.: Verstärkungsblech
- 10.: Begrenzungslinie
- 11.: Außenwand
- 12.: Innenwand
- 13.: Element
- 14.: Flansch von 11
- 15.: Flansch von 13
- 16.: Randbereich von 9
- 17.: Rand
- 18.: Zahn
- 19.: Zahnzwischenraum
- 20.: Schweißlinie
- 21.: Schweißlinie

## Patentansprüche

1. Karosserie für ein Kraftfahrzeug mit einem ersten und einem zweiten Karosserieteil (1, 2; 11, 13), die entlang zweier Linien (20, 21) verbunden sind und zwischen den zwei Linien (20, 21) einen langgestreckten Hohlraum begrenzen, und einem Verstärkungselement (9), das sich durch den Hohlraum von einer der Linien (20) zur anderen (21) erstreckt und an den Linien (20, 21) mit den zwei Karosserieteilen (1, 2) verbunden ist, **dadurch gekennzeichnet, dass** das Verstärkungselement (9) einen gezahnten Rand aufweist, dessen Zähne wenigstens eine der Linien (20, 21) kreuzen, dass entlang dieser Linie die Zähne mit den zwei Karosserieteilen verbunden sind und dass in Zahnzwischenräumen des Randes die Karosserieteile direkt miteinander verbunden sind.

2. Karosserie nach Anspruch 1, **dadurch gekennzeichnet, dass** ein Bereich des Hohlraums, in den das Verstärkungselement (9) eingefügt ist, einen geknickten Verlauf hat.

3. Karosserie nach Anspruch 1 oder 2, **dadurch gekennzeichnet, dass** der Hohlraum sich benachbart zu einer Türöffnung (4) erstreckt.

4. Karosserie nach Anspruch 3, **dadurch gekennzeichnet, dass** der Hohlraum sich unter der Türöffnung (4) und zwischen der Türöffnung (4) und einem rückwärtigen Radkasten (8) erstreckt.

5. Karosserie nach Anspruch 4, **dadurch gekennzeichnet, dass** eine Aufnahmestelle (22) für einen Wagenheber benachbart zu einer der Linien (21) gebildet ist.

6. Karosserie nach einem der vorhergehenden Ansprüche, **dadurch gekennzeichnet, dass** eines der Karosserieteile eine Seitenwand (1) und das andere eine Plattform (2) ist.

7. Karosserie nach einem der Ansprüche 1 bis 5, **dadurch gekennzeichnet, dass** die zwei Karosserieteile ein Außenblech und ein Innenblech einer Seitenwand sind.

8. Karosserie nach einem der Ansprüche 1 bis 7, **dadurch gekennzeichnet, dass** eines der Karosserieteile (1) ein Blech (12) mit einem gezahnten Rand umfasst, dessen Zähne (18) wenigstens eine der Linien (20, 21) kreuzen.

9. Karosserie nach Anspruch 8, **dadurch gekennzeichnet, dass** das eine Karosserieteil eine Seitenwand (1) der Karosserie bildet, und dass das Blech (12) mit gezahntem Rand eine innere Lage der Seitenwand (1) ist.

10. Karosserie nach einem der vorhergehenden Ansprüche, **dadurch gekennzeichnet, dass** das Verstärkungselement (9) aus einem Dualphasenstahl gefertigt ist.

## Claims

1. A body for a motor vehicle, comprising a first and a second body part (1, 2; 11, 13) which are connected along two lines (20, 21) and form an elongated hollow space between the two lines (20, 21), and a reinforcing element (9) which extends through the hollow space from one of the lines (20) to the other (21) and is connected at the lines (20, 21) with the two body parts (1, 2), **characterized in that** the reinforcing element (9) has a serrated edge, the teeth of which cross at least one of the lines (20, 21), that the teeth are connected with the two body parts along this line, and that the body parts are directly connected with one another in the intermediate spaces of the teeth.

2. A body according to claim 1, **characterized in that** one region of the hollow space in which the reinforcing element (9) is inserted has a bent progression.

3. A body according to claim 1 or 2, **characterized in that** the hollow space extends adjacent to a door opening (4).

4. A body according to claim 3, **characterized in that** the hollow space extends beneath the door opening (4) and between the door opening (4) and a rear wheelhouse (8).

5. A body according to claim 4, **characterized in that** an accommodating point (22) for a jack is formed adjacent to one of the lines (21).

6. A body according to one of the preceding claims, **characterized in that** one of the body parts is a side wall (1) and the other a platform (2).

7. A body according to one of the claims 1 to 5, **characterized in that** the two body parts are an outer panel and an inner panel of a side wall.

8. A body according to one of the claims 1 to 7, **characterized in that** one of the body parts (1) is a panel (12) with a serrated edge, the teeth (18) of which intersect at least one of the lines (20, 21).

9. A body according to claim 8, **characterized in that** the one body part forms a side wall (1) of the body, and that the panel (12) with the serrated edge is an inner layer of the side wall (1).

10. A body according to one of the preceding claims,
**characterized in that** the reinforcing element (9) is made of a dual-phase steel.

## Revendications

1. Carrosserie pour un véhicule à moteur avec une première partie de carrosserie et une deuxième (1, 2 ; 11, 13), qui sont assemblées le long de deux lignes (20, 21) et délimitent entre les deux lignes (20, 21) un espace creux allongé, et avec un élément de renfort (9) qui s'étend à travers l'espace creux de l'une des lignes (20) à l'autre (21) et qui est assemblé au niveau des lignes (20, 21) avec les deux parties de carrosserie (1,2), **caractérisée en ce que** l'élément de renfort (9) présente un bord denté dont le dents croisent au moins une des lignes (20, 21), **en ce que** le long de cette ligne, **en ce que** les dents sont assemblées aux deux parties de carrosserie et **en ce que** les parties de carrosserie sont directement assemblées l'une à l'autre dans les intervalles entre les dents du bord.

2. Carrosserie selon la revendication 1, **caractérisée en ce qu'**une zone de l'espace creux dans laquelle l'élément de renfort (9) est introduit a une forme angulée.

3. Carrosserie selon la revendication 1 ou 2, **caractérisée en ce que** l'espace creux s'étend à proximité d'une ouverture de porte (4).

4. Carrosserie selon la revendication 3, **caractérisée en ce que** l'espace creux s'étend sous l'ouverture de porte (4) et entre l'ouverture de porte (4) et un logement de roue arrière (8).

5. Carrosserie selon la revendication 4, **caractérisée en ce qu'**un point de mise en place (22) pour un cric est formé à proximité de l'une des lignes (21).

6. Carrosserie selon l'une des revendications précédentes, **caractérisée en ce que** l'une des pièces de carrosserie est une paroi latérale (1) et l'autre une plate-forme (2).

7. Carrosserie selon l'une des revendications 1 à 5, **caractérisée en ce que** les deux parties de carrosserie sont une tôle extérieure et une tôle intérieure d'une paroi latérale.

8. Carrosserie selon l'une des revendications 1 à 7, **caractérisée en ce que** l'une des parties de carrosserie (1) comprend une tôle (12) avec un bord denté, dont les dents (18) coupent au moins une des lignes (20, 21).

9. Carrosserie selon la revendication 8, **caractérisée en ce qu'**une partie de carrosserie forme une paroi latérale (1) de la carrosserie et **en ce que** la tôle (12) à bord denté est une couche intérieure de la paroi latérale (1).

10. Carrosserie selon l'une des revendications précédentes, **caractérisée en ce que** l'élément de renfort (9) est fabriqué dans un acier biphasé.
